(19) Europäisches Patentamt / European Patent Office / Office européen des brevets

(11) **EP 3 782 908 B1**

(12) **EUROPEAN PATENT SPECIFICATION**

(45) Date of publication and mention
of the grant of the patent:
**06.04.2022  Bulletin 2022/14**

(21) Application number: **19202328.1**

(22) Date of filing: **09.10.2019**

(51) International Patent Classification (IPC):
**B64C 27/00** *(2006.01)*      **G05B 23/02** *(2006.01)*

(52) Cooperative Patent Classification (CPC):
**B64C 27/04; B64D 45/00; G05B 23/0221;**
B64D 2045/0085

(54) **AUTOMATED TREND DETECTION**

AUTOMATISCHE TRENDERKENNUNG

DÉTECTION AUTOMATIQUE DE TENDANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.08.2019  US 201916547182**

(43) Date of publication of application:
**24.02.2021  Bulletin 2021/08**

(73) Proprietor: **Textron Innovations Inc.
Providence, Rhode Island 02903 (US)**

(72) Inventors:
• **TUCKER, Brian Edward
Fort Worth, TX 76110 (US)**
• **LEDBETTER, Matthew Curtis
North Richland Hills, TX 76180 (US)**

(74) Representative: **Barker Brettell LLP
100 Hagley Road
Edgbaston
Birmingham B16 8QQ (GB)**

(56) References cited:
**DE-A1- 19 902 326      US-A1- 2019 108 691**

**Description**

BACKGROUND

Technical Field

The present disclosure relates generally to vehicle monitoring and more particularly, but not by way of limitation, to systems and methods of automated trend detection.

History Of Related Art

A rotorcraft may include one or more rotor systems including one or more main rotor systems. A main rotor system generates aerodynamic lift to support the weight of the rotorcraft in flight and thrust to move the rotorcraft in forward flight. Another example of a rotorcraft rotor system is a tail rotor system. A tail rotor system may generate thrust in the same direction as the main rotor system's rotation to counter the torque effect created by the main rotor system. For smooth and efficient flight in a rotorcraft, a pilot balances the engine power, main rotor collective thrust, main rotor cyclic thrust and the tail rotor thrust, and a control system may assist the pilot in stabilizing the rotorcraft and reducing pilot workload. The systems for engines, transmissions, drive system, rotors, and the like, are critical to the safe operation of the rotorcraft in flight. The elements of system such as mechanical systems, electrical systems, hydraulic systems, and the like, are each subject to unique wear factors and monitoring, inspection or maintenance requirements.

US 2019/0108691 A1 discloses a system for adaptable trend detection for component condition indicator data, in which a trend is indicated in a condition indicator set according to the current condition indicator, a previous condition indicator and a volatility of a portion of the condition indicator set, and an alert is provided in response to determining that the trend is indicated

DE19902326A1 discloses methods of recognizing damage in rotary machine such as gearwheels, bearings and motors by measuring significant acutely occurring changes in acoustic behavior or an assembly.

SUMMARY

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

In accordance with a first aspect of the invention there is provided a method according to claim 1.

In accordance with a second aspect of the invention there is provided a computer-program product according to claim 10.

In accordance with a third aspect of the invention there is provided a computer system according to claim 9.

BRIEF DESCRIPTION OF THE DRAWINGS

A more complete understanding of the method and apparatus of the present disclosure may be obtained by reference to the following Detailed Description when taken in conjunction with the accompanying Drawings wherein:

FIG. 1 illustrates a rotorcraft according to some embodiments;
FIG. 2 illustrates a fly-by-wire flight control system for a rotorcraft according to some embodiments;
FIG. 3 is a block diagram illustrating a system for trend detection of component condition indicator data according to some embodiments;
FIG. 4A is a graph that includes condition indicator data and volatility-based movement significance (VBMS) values;
FIG. 4B is a graph that illustrates a trend indication according to the example of FIG. 4A;
FIG. 5 is a graph illustrating a trend indication for noisy condition indicator data 504.
FIG. 6A is a graph illustrating a trend indication for condition indicator data;
FIGS. 6B-C are zoomed-in views of the graph of FIG. 6A;
FIGS. 7A-C are graphs illustrating trend indications for condition indicator data;
FIG. 8 is a flow diagram illustrating a method for providing an alert signal for condition indicator trends according to some embodiments; and
FIG. 9 is a diagram illustrating a computer system that may be used to implement a system, data terminal, or data server according to some embodiments.

DETAILED DESCRIPTION

The increasing use of rotorcraft, in particular, for commercial and industrial applications, has led to the development of larger more complex rotorcraft. However, as rotorcraft become larger and more complex, the differences between flying rotorcraft and fixed wing aircraft has become more pronounced. Since rotorcraft use one or more main rotors to simultaneously provide lift, control attitude, control altitude, and provide lateral or positional movement, different flight parameters and controls are tightly coupled to each other, as the aerodynamic characteristics of the main rotors affect each control and movement axis. For example, the flight characteristics of a rotorcraft at cruising speed or high speed may be significantly different than the flight characteristics at hover or at relatively low speeds. Additionally, different flight control inputs for different axes on the main rotor, such as cyclic inputs or collective inputs, affect other flight controls or flight characteristics of the rotorcraft. For example, pitching the nose of a rotorcraft forward to increase forward speed will generally cause the rotorcraft to lose altitude. In such a situation, the collective may be increased to maintain level flight, but the increase in collective requires increased power at the main rotor which, in turn, requires additional anti-torque force from the tail rotor. This is in contrast to fixed wing systems where the control inputs are less closely tied to each other and flight characteristics in different speed regimes are more closely related to each other.

Recently, fly-by-wire (FBW) systems have been introduced in rotorcraft to assist pilots in stably flying the rotorcraft and to reduce workload on the pilots. The FBW system may provide different control characteristics or responses for cyclic, pedal or collective control input in the different flight regimes, and may provide stability assistance or enhancement by decoupling physical flight characteristics so that a pilot is relieved from needing to compensate for some flight commands issued to the rotorcraft. FBW systems may be implemented in one or more flight control computers (FCCs) disposed between the pilot controls and flight control systems, providing corrections to flight controls that assist in operating the rotorcraft more efficiently or that put the rotorcraft into a stable flight mode while still allowing the pilot to override the FBW control inputs. The FBW systems in a rotorcraft may, for example, automatically adjust power output by the engine to match a collective control input, apply collective or power correction during a cyclic control input, provide automation of one or more flight control procedures provide for default or suggested control positioning, or the like.

Embodiments of the system presented herein are directed to providing a system for measuring operating conditions in a vehicle, and determining trends of the operating conditions in order to provide condition alerts to operators and technicians. In some embodiments, a reporting system receives signals from one or more sensors, and determines condition indicators that may indicate the magnitude or other properties of conditions such as vibration or the like. The system analyzes a series of condition indicators associated with a particular operating element to determine trends in the condition indicators. The trends may be used to determine that the condition indicators for a particular operating element have changed due to, for example, wear, damage, or the like. For example, vibration associated with a fuel pump, transmission gear, engine turbine, or the like, may be tracked, and trends associated with a change outside of a trend threshold may indicate that the operating element may need inspection, repair or replacement.

In some embodiments, the system may use volatility and movement of condition indicators over a window to determine trends for the associated operating element. In some embodiments, volatility-based movement significance (VBMS) analysis may be used to determine the trends, and in some embodiments, the VBMS may be a ratio of the movement to the volatility. The VBMS may be compared to a static trend threshold, or to an adaptable trend threshold, based on one or more of the data or condition indicators, the volatility of the condition indicators, the static trend threshold, or the like, and the comparison may indicate the trend. When a trend is detected, the system may provide an alert through, for example, an indicator in the vehicle, through a report, through a web interface accessible through a server, through an automated message, or the like.

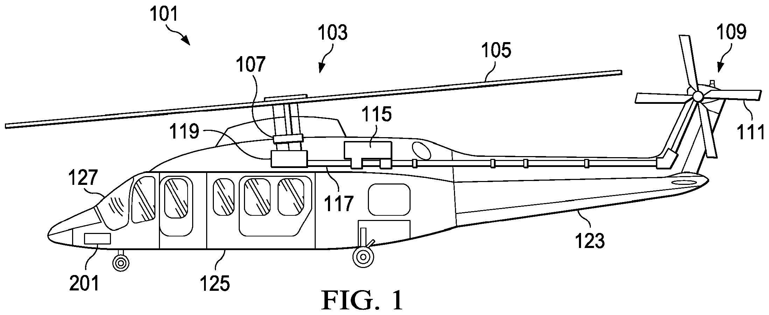

FIG. 1 illustrates a rotorcraft 101 according to some embodiments. The rotorcraft 101 has a main rotor system 103, which includes a plurality of main rotor blades 105. The pitch of each main rotor blade 105 may be controlled by a swashplate 107 in order to selectively control the attitude, altitude and movement of the rotorcraft 101. The swashplate 107 may be used to collectively and/or cyclically change the pitch of the main rotor blades 105. The rotorcraft 101 also has an anti-torque system, which may include a tail rotor 109, no-tail-rotor (NOTAR), or dual main rotor system. In rotorcraft with a tail rotor 109, the pitch of each tail rotor blade 111 is collectively changed in order to vary thrust of the anti-torque system, providing directional control of the rotorcraft 101. The pitch of the tail rotor blades 111 is changed by one or more tail rotor actuators. In some embodiments, the FBW system sends electrical signals to the tail rotor actuators or main rotor actuators to control flight of the rotorcraft.

Power is supplied to the main rotor system 103 and the anti-torque system by engines 115. There may be one or more engines 115, which may be controlled according to signals from the FBW system. The output of the engine 115 is provided to a driveshaft 117, which is mechanically and operatively coupled to the main rotor system 103 and the anti-torque system through a main rotor transmission 119 and a tail rotor transmission, respectively.

The rotorcraft 101 further includes a fuselage 125 and tail section 123. The tail section 123 may have other flight control devices such as horizontal or vertical stabilizers, rudder, elevators, or other control or stabilizing surfaces that are used to control or stabilize flight of the rotorcraft 101. The fuselage 125 includes a cockpit 127, which includes displays, controls, and instruments. It should be appreciated that even though rotorcraft 101 is depicted as having certain illustrated features, the rotorcraft 101 may have a variety of implementation-specific configurations. For instance, in some embodiments, cockpit 127 is configured to accommodate a pilot or a pilot and co-pilot, as illustrated. It is also contemplated, however, that rotorcraft 101 may be operated remotely, in which case cockpit 127 could be configured as a fully functioning cockpit to accommodate a pilot (and possibly a co-pilot as well) to provide for greater flexibility of use, or could be configured with a cockpit having limited functionality (e.g., a cockpit with accommodations for only one person who would function as the pilot operating perhaps with a remote co-pilot or who would function as a co-pilot or back-up pilot with the primary piloting functions being performed remotely. In yet other contemplated embodiments, rotorcraft 101 could be configured as an unmanned vehicle, in which case cockpit 127 could be eliminated entirely in order to save space and cost.

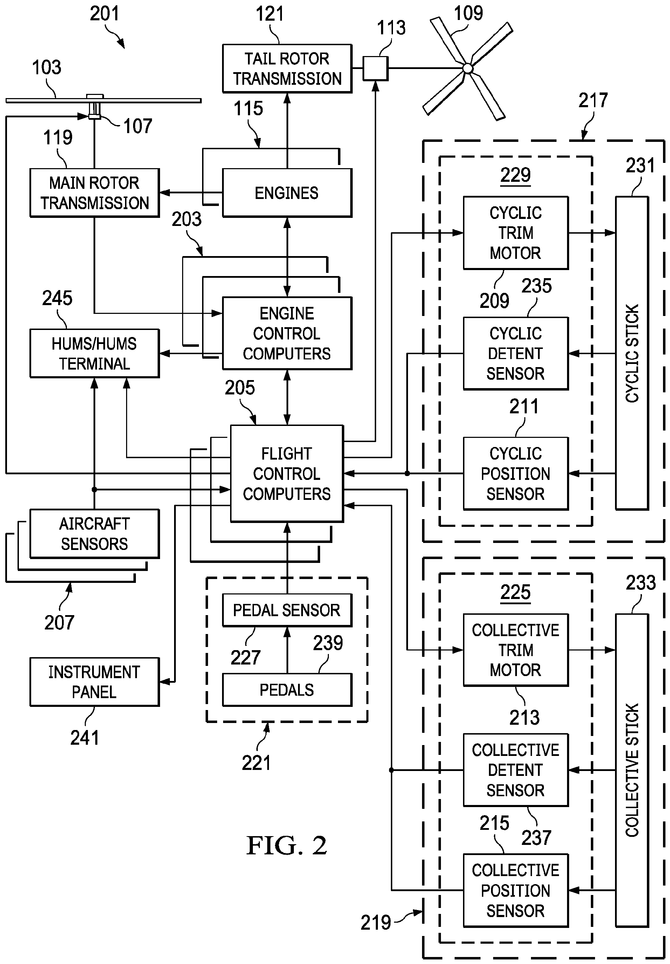

FIG. 2 illustrates a fly-by-wire flight control system 201 for a rotorcraft according to some embodiments. A pilot may manipulate one or more pilot flight controls in order to control flight of the rotorcraft. The pilot flight controls may include manual controls such as a cyclic stick 231 in a cyclic control assembly 217, a collective stick 233 in a collective control assembly 219, and pedals 239 in a pedal control assembly 221. Inputs provided by the pilot to the pilot flight controls may be transmitted mechanically and/or electronically (e.g., via the FBW flight control system) to flight control devices by the fly-by-wire flight control system 201. Flight control devices may represent devices operable to change the flight characteristics of the rotorcraft. Flight control devices on the rotorcraft may include mechanical and/or electrical systems operable to change the positions or angle of attack of the main rotor blades 105 and the tail rotor blades in or to change the power output of the engines 115, as examples. Flight control devices include systems such as the swashplate 107, tail rotor actuator 113, and systems operable to control the engines 115. The fly-by-wire flight control system 201 may adjust the flight control devices independently of the flight crew in order to stabilize the rotorcraft, reduce workload of the flight crew, and the like. The fly-by-wire flight control system 201 includes engine control computers (ECCUs) 203, flight control computers (FCCs) 205, and aircraft sensors 207, which collectively adjust the flight control devices and monitors the rotorcraft during operation.

The fly-by-wire flight control system 201 has one or more FCCs 205. In some embodiments, multiple FCCs 205 are provided for redundancy. One or more modules within the FCCs 205 may be partially or wholly embodied as software and/or hardware for performing any functionality described herein. In embodiments where the fly-by-wire flight control system 201 is a FBW flight control system, the FCCs 205 may analyze pilot inputs and dispatch corresponding commands to the ECCUs 203, the tail rotor actuator 113, and/or actuators for the swashplate 107. Further, the FCCs 205 are configured and receive input commands from the pilot controls through sensors associated with each of the pilot flight controls. The input commands are received by measuring the positions of the pilot controls. The FCCs 205 also control tactile cues to the pilot controls or display information in instruments on, for example, an instrument panel 241.

The ECCUs 203 control the engines 115. For example, the ECCUs 203 may vary the output power of the engines 115 to control the rotational speed of the main rotor blades or the tail rotor blades. The ECCUs 203 may control the output power of the engines 115 according to commands from the FCCs 205, or may do so based on feedback such as measured revolutions per minute (RPM) of the main rotor blades.

The cyclic control assembly 217 is connected to a cyclic trim assembly 229 having one or more cyclic position sensors 211, one or more cyclic detent sensors 235, and one or more cyclic actuators or cyclic trim motors 209. The cyclic position sensors 211 measure the position of the cyclic stick 231. In some embodiments, the cyclic stick 231 is a single control stick that moves along two axes and permits a pilot to control pitch, which is the vertical angle of the nose of the rotorcraft and roll, which is the side-to-side angle of the rotorcraft. In some embodiments, the cyclic control assembly 217 has separate cyclic position sensors 211 that measuring roll and pitch separately. The cyclic position sensors 211 for detecting roll and pitch generate roll and pitch signals, respectively, (sometimes referred to as cyclic longitude and cyclic latitude signals, respectively) which are sent to the FCCs 205, which controls the swashplate 107, engines 115, tail rotor 109 or related flight control devices.

The cyclic trim motors 209 are connected to the FCCs 205, and receive signals from the FCCs 205 to move the cyclic stick 231. In some embodiments, the FCCs 205 determine a suggested cyclic stick position for the cyclic stick 231 according to one or more of the collective stick position, the pedal position, the speed, altitude and attitude of the rotorcraft, the engine RPM, engine temperature, main rotor RPM, engine torque or other rotorcraft system conditions or flight conditions, or according to a predetermined function selected by the pilot. The suggested cyclic stick position is a position determined by the FCCs 205 to give a desired cyclic action. In some embodiments, the FCCs 205 send a suggested cyclic stick position signal indicating the suggested cyclic stick position to the cyclic trim motors 209. While the FCCs 205 may command the cyclic trim motors 209 to move the cyclic stick 231 to a particular position (which would in turn drive actuators associated with swashplate 107 accordingly), the cyclic position sensors 211 detect the actual position of the cyclic stick 231 that is set by the cyclic trim motors 206 or input by the pilot, allowing the pilot to override the suggested cyclic stick position. The cyclic trim motor 209 is connected to the cyclic stick 231 so that the pilot may move the cyclic stick 231 while the trim motor is driving the cyclic stick 231 to override the suggested cyclic stick position. Thus, in some embodiments, the FCCs 205 receive a signal from the cyclic position sensors 211 indicating the actual cyclic stick position, and do not rely on the suggested cyclic stick position to command the swashplate 107.

Similar to the cyclic control assembly 217, the collective control assembly 219 is connected to a collective trim assembly 225 having one or more collective position sensors 215, one or more collective detent sensors 237, and one or more collective actuators or collective trim motors 213. The collective position sensors 215 measure the position of a collective stick 233 in the collective control assembly 219. In some embodiments, the collective stick 233 is a single control stick that moves along a single axis or with a lever type action. A collective position sensor 215 detects the position of the collective stick 233 and sends a collective position signal to the FCCs 205, which controls engines 115, swashplate actuators, or related flight control devices according to the collective position signal to control the vertical movement of the rotorcraft. In some embodiments, the FCCs 205 may send a power command signal to the ECCUs 203 and a collective command signal to the main rotor or swashplate actuators so that the angle of attack of the main blades is raised or lowered collectively, and the engine power is set to provide the needed power to keep the main rotor RPM substantially constant.

The collective trim motor 213 is connected to the FCCs 205, and receives signals from the FCCs 205 to move the collective stick 233. Similar to the determination of the suggested cyclic stick position, in some embodiments, the FCCs 205 determine a suggested collective stick position for the collective stick 233 according to one or more of the cyclic stick position, the pedal position, the speed, altitude and attitude of the rotorcraft, the engine RPM, engine temperature, main rotor RPM, engine torque or other rotorcraft system conditions or flight conditions, or according to a predetermined function selected by the pilot. The FCCs 205 generate the suggested collective stick position and send a corresponding suggested collective stick signal to the collective trim motors 213 to move the collective stick 233 to a particular position. The collective position sensors 215 detect the actual position of the collective stick 233 that is set by the collective trim motor 213 or input by the pilot, allowing the pilot to override the suggested collective stick position.

The pedal control assembly 221 has one or more pedal sensors 227 that measure the position of pedals or other input elements in the pedal control assembly 221. In some embodiments, the pedal control assembly 221 is free of a trim motor or actuator, and may have a mechanical return element that centers the pedals when the pilot releases the pedals. In other embodiments, the pedal control assembly 221 has one or more trim motors that drive the pedal to a suggested pedal position according to a signal from the FCCs 205. The pedal sensor 227 detects the position of the pedals 239 and sends a pedal position signal to the FCCs 205, which controls the tail rotor 109 to cause the rotorcraft to yaw or rotate around a vertical axis.

The cyclic and collective trim motors 209 and 213 may drive the cyclic stick 231 and collective stick 233, respectively, to suggested positions. The cyclic and collective trim motors 209 and 213 may drive the cyclic stick 231 and collective stick 233, respectively, to suggested positions, but this movement capability may also be used to provide tactile cueing to a pilot. Additionally, the cyclic control assembly 217, collective control assembly 219 and/or pedal control assembly 221 may each have one or more detent sensors that determine whether the pilot is handling a particular control device. The FCCs 205 may provide different default control or automated commands to one or more flight systems based on the detent status of a particular stick or pilot control.

The aircraft sensors 207 may be in communication with the FCCs 205, a health and usage monitoring system (HUMS) 245. The aircraft sensors 207 may include sensors for monitoring operation of the rotorcraft, providing pilot data, providing operational data, or the like, and may include measuring a variety of rotorcraft systems, operating conditions, flight parameters, environmental conditions and the like. For example, the aircraft sensors 207 may include sensors for gathering flight data, and may include sensors for measuring airspeed, altitude, attitude, position, orientation, temperature, airspeed, vertical speed, and the like. The aircraft sensors 207 may include sensors relying upon data or signals originating external to the rotorcraft, such as a global positioning system (GPS) sensor, a very high frequency (VHF) omnidirectional range sensor, Instrument Landing System (ILS), and the like. The aircraft sensors 207 may also include sensors for reading operational data such as vibration, device rotational speed, electrical operating characteristics, fluid flows, or the like.

The fly-by-wire flight control system 201 may further include the HUMS 245 or a HUMS terminal. In some embodiments, the HUMS collects data from fly-by-wire flight control system 201 elements for storage and later download, analysis, or the like. In some embodiments, the HUMS 245 may be connected to one or more aircraft sensors 207, FCCs 205, ECCUs 203, standalone sensors, sensors integrated into the HUMS, or other system components, or a combination of components. In some embodiments, the HUMS 245 may be separate from the FCCs 205, and may be implemented as a standalone system that communicates with, but that is operationally separate from, other elements of the fly-by-wire flight control system 201. The HUMS 245 may be a terminal that stores raw data from one or more aircraft components, and provides the raw data to a server for interpretation and analysis. In other embodiments, the HUMS 245 may interpret raw data to determine one or more condition indicators for a server or other system that analyzes or displays the data. In yet another embodiment, the HUMS 245 may analyze the raw data or condition indicators to determine a trend or problem with a data set, and may display or indicate the interpreted data, a warning, a system status, or like, on the instrument panel 241, on a dedicated display, through an audible warning, within another display such as a flight director display, though a tactile feedback system, or the like. The HUMS 245 may use data from the aircraft sensor 207 to determine an operating condition such as vibration. For example, the HUMS 245 may use a combination of vibration data and rotational speed data to generate synchronous vibration data or other transformed data types, which may be analyzed for trends indicating developing problems with specific components associated with the vibration data.

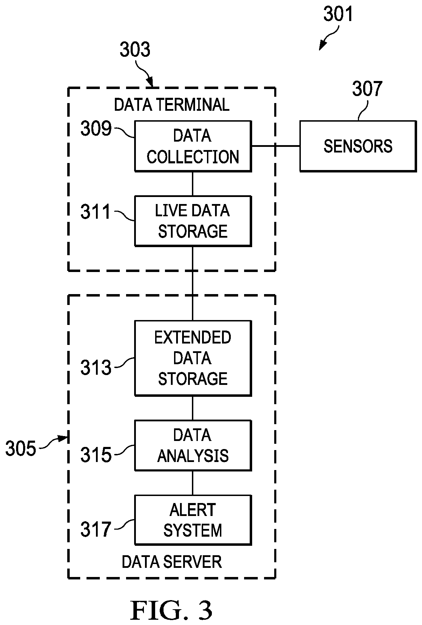

FIG. 3 is a block diagram illustrating a HUMS 301 for trend detection of component condition indicator data according to some embodiments. The HUMS 301 may include a data terminal 303 that is connected to one or more sensors 307 and a data server 305. The sensors 307 may be aircraft sensors, as discussed above, and may take sensor readings and generate one or more sensor signals such as electrical signals, data elements, or the like, that indicate one or more operational conditions. For example, a sensor 307 may be a vibration sensor near an engine, gear set or transmission that detects vibrations from the local operating elements. In another example, the sensor 307 may be a voltage sensor or current detector that detects the voltage or current drawn by an electrical operating element such as a pump or a motor. In yet another example, the sensor 307 may be a pressure or flow sensor that detects the pressure of a hydraulic line or fuel line, the flow rate of a fluid such as fuel, coolant, oil hydraulic fluid, or the like.

The data terminal 303 may be a computer or other device that receives the sensor signals and stores the sensor signals locally for later analysis. In some embodiments, one or more of the HUMS terminal, the FCCs or ECCUs are data terminals 303. The data terminal 303 has a data collection element 309 that is a data handling element such as a processor, data collection circuit or device, or the like. In some embodiments, the data terminal 303 is a HUMS terminal that is a centralized device or standalone device that collects raw data from the sensors 307 and that generates condition indicator data from the raw data signals, or that collects condition indicator data from the sensors 307. In other embodiments, the data terminal 303 is a HUMS terminal that receives calculated or analyzed data such as alerts, trends, or the like from smart sensors 307 that determine condition indicators and perform analysis on the condition indicators. In yet another embodiment, the data terminal 303 may be, or include, a network of smart sensors 307 that act autonomously to collect data, and may determine condition indicators and perform some analysis of the condition indicator data. In such an embodiment, the smart sensors 307 may store the collected and calculated data or analysis for delivery directly to the data server 305. In some embodiments, the data collection element 309 also includes a communications circuit that receives the sensor signal from the sensors 307 and provides the raw sensor signal to the data collection element 309, which saves a condition indicator value based on the raw sensor signal in live data storage 311.

In some embodiments, the data terminal 303 stores the sensor signal as the condition indicator in the live data storage 311, and in other embodiments, the data terminal 303 processes the raw sensor signal to generate a condition indicator based on, or according to, the raw sensor signal before storing the condition indicator. The data terminal 303 may actively query a sensor 307, may receive a signal from a sensor 307, or may sample a signal from a sensor 307 to acquire a raw data signal or sensor signal. The data terminal 303 may acquire the data signal at a particular time in a flight or in response to one or more operating conditions meeting a predetermined set of criteria. Thus, each condition indicator data set may be associated with an operating condition. The data terminal 303 may acquire a data signal, by sampling a continuous or live signal, or querying a sensor, when the data terminal 303 detects that flight conditions or operating conditions meet one or more criteria. For example, the data terminal 303 may be an FCC, and may determine that the engines are in a maximum takeoff power (MTOP) state based on the throttle and collective settings, and may acquire a data signal indicating, for example, vibrations of one or more components of an engine, transmission, gear train, or the like, or for fuel flow, power generation, transmission torque, or the like. In another example, the data terminal 303 may determine that the rotorcraft is in a hover, in forward flight, or in another flight state, and may acquire the data signal during the flight state. Condition indicator data sets may be formed from measurements or condition indicators determined in relation to similar operating conditions to provide consistent data. For example, a first condition indicator data set may include condition indicators for a main rotor transmission gear during MTOP across multiple flights, while a second condition indicator data set may include condition indicators for the same main rotor transmission gear during hover across multiple flights.

The data terminal 303 may store the data signal, a sample of the data signal, condition indicators, and other sensor data or relevant identifying information in the live data storage 311. In some embodiments, the data signal or condition indicator may be tagged with a date, time, and operating condition indicator information when stored in the live data storage 311 for later transmission to the data server 305.

The data server 305 aggregates data from one or more data terminals 303. The data server 305 collects data in one or more condition indicator data sets for aggregation and trend analysis, and may provide a report, alerts or other information related to detected trends for individual condition indicators data sets. The data server 305 stores condition indicators, trend information, and the like, in extended data storage 313. A data analysis element 315 reads condition indicator information and perform trend analysis or detection on the condition indicators, and saves trend information generated by the trend analysis into the extended data storage.

The data server 305 may be, for example, a server that is remote from the data terminal 303, or may be local to, or the same device as the data terminal. 303. In some embodiments, the data terminal 303 and data server 305 are both disposed in a vehicle such as a rotorcraft, and may both be implemented in one or more FCCs. In other embodiments, the data terminal 303 may be implemented in a device that is distinct from the device implementing the data server 305.

For example, the data terminal 303 may be implemented in a dedicated monitoring computer or device using, for example, a purpose built processor, microcontroller, or the like, or may be implemented in an ECCU or other control computer, while the data server 305 is implemented in, for example, an FCC. In other embodiments, the data server 305 may be a diagnostic computer, remote server, or the like, that is separate from the vehicle on which the data terminal 303 is disposed. The data terminal 303 may transfer data to the data server 305 by responding to query from a maintenance computer, automatically transferring data to a remote data server 305 through a wireless connection, a manual transfer or download by a user using, for example, a non-transitory computer readable medium such as a universal serial bus (USB) stick or secure digital (SD) card, or the like.

The data terminal 303 collects a series of condition indicators for each operating condition that the data server 305 monitors. In some embodiments, the data server 305 receives raw sensor data or a data signal from the data terminal 303, or from the sensors 307, and performs analysis to isolate condition indicators from the data signal or raw sensor data. In other embodiments, the data terminal 303 performs the analysis and sends a processed data signal such as a condition indicator, data signal sample, or the like to the data server.

In some embodiments, the data signal may indicate more than one condition indicator, and processing the data signal may include isolating a condition indicator from the data signal. For example, the data terminal 303 may acquire a data signal from a vibration sensor adjacent to a main rotor transmission. The data signal may be a sample of the sensor data over a predetermined period of time, and may include data from multiple vibration sources. The data signal may be analyzed, by the data terminal 303 or the data server 305, by, for example, filtering using Fourier analysis or the like, to isolate signals for individual condition indicators. A Fourier transform may be applied to a data signal to transform the data signal into a filtered signal such as a frequency domain signal, which will indicate the amplitude of different subsignals making up the data signal. The subsignals at different frequencies may be associated with different condition indicators. For example, a first gear rotating at 300 RPM will correspond to a frequency signal at a first frequency in the filtered signal, while a second gear rotating at 2000 RPM will correspond to a frequency subsignal at a second frequency in the filtered signal. Thus, a first vibration condition indicator for the first gear will correspond to a first vibration subsignal having a frequency of about 5 Hz, while a second vibration condition indicator for the second gear will correspond to a second vibration subsignal having a frequency around 33.3 Hz. Thus, multiple condition indicators may be determined from a single data signal or a single sensor. In some embodiments, the sensors 307 may perform the processing of the data signals to determine the condition indicators, and may send, for example, a data packet or other data signal to data terminal 303. In other embodiments, the sensors 307 may send the data signal to the data collection element 309 of the data terminal 303, which processes the data signal to determine the condition indicators. In another embodiment, the sensors 307 may send the data signal to data terminal 303, which then passes the data signal to the data server 305 for determination of the condition indicators.

The data server 305 attempts to detect trends of condition indicators where the trend deviates from a normal or expected value. In some embodiments, the data server 305 has an alert system 317 that provides an alert indicating that a trend of a condition indicator has exceeded a particular threshold such as a static indicator threshold, static trend threshold or an adaptable trend threshold, a combination of the same, or the like. The alert system 317 may provide the alert to a vehicle operator, a maintenance technician, a fleet operator, a vehicle, owner, or to an automated system. The alert system 317 may be disposed in the vehicle, and include a cockpit indicator that is an audible indicator such as a buzzer or voice prompt provided through a flight director system, a graphic warning such as a note or other warning on a graphic screen, instrument screen, flight director screen, or the like, or may be provided as a dedicated visual indicator such as a dedicated a warning light, lamp, or the like. In other embodiments, the alert system 317 may be remote from the vehicle, and may provide an automated alert by generating a report with a list of conditions of concern, automatically messaging a technician or owner, providing an indicator on a monitoring system, or the like. For example, a data server 305 may be a monitoring server at a fleet operator, and, as each vehicle returns to the fleet base, the vehicle may automatically transmit condition indicator data to the data server by way of a wireless link, or through a maintenance computer connected to the vehicle by a technician. The data server 305 may aggregate the newly received condition indicator data for one or more monitored performance parameters with existing condition indicator or trend data for the relevant performance parameter, and analyze the data for trends. Upon detecting that a trend or condition data for a particular operating parameter has exceeded a particular threshold such as a static trend threshold or an adaptable trend threshold, the data server 305 may generate one or more alert signals, which may include generating a problem report indicating that a particular vehicle system, element or the like needs to be inspected, replaced, or otherwise addressed by a technician. The report may be generated in response to determining that the trend indicates a problem, or in response to query for the report. In other embodiments, the alert system 317 may generate an alert signal that automatically messages a fleet operator, vehicle owner, maintenance technician, or the like by email, short messaging system (SMS) message, text message, automated voice call, or the like. In other embodiments, the alert system 317 may generate the alert signal to display an indicator on a management web page, maintenance checklist, vehicle record, or the like. In some embodiments, the alert may indicate a severity of a problem, with the data server 305 comparing the trend data to multiple different thresholds. Thus, the alert may indicate the severity of a trend for a particular vehicle element. In some embodiments, a vehicle-born alert and a remote alert may be used in combination. For example, a maintenance or inspection alert may be generated for a transmission gear when trend data indicates that vibration of the gear has exceeded a threshold such as a static trend threshold or an adaptable trend threshold, indicating that the transmission gear should be inspected for possible damage. The alert system 317 may generate a warning or problem message such as automated remote message and/or an in-cockpit warning when the trend data exceeds a higher threshold, indicating that further use of the gear should be avoided. Thus, the alert system 317 may take different alert actions based on the comparison of the trend data to different thresholds.

The data server 305 may use data from one or more data collection points, such as sensors 307, data collection elements 309, data terminals 303, or like, to determine a trend for a particular condition indicator. In some embodiments, the data server 305 may use a difference between two selected data points in a window, or movement, in combination with a sum of absolute values of the difference in adjacent data points in the window, or volatility, for trend detection. More particularly, the data server 305 may use a ratio of the movement to the volatility, or VBMS, to determine the trend in the condition indicator. Positive VBMS values indicate an upward trend in the data and negative values indicate downwards trends. A static trend threshold, for example, may be used to set an alert at a certain level, either positive, negative, or both.

Applying the VBMS to the condition indicators permits the HUMS 301 to detect trends in the data rather than the absolute values of the data. A static indicator threshold is an absolute, constant, or fixed threshold that is compared to the condition indicator values. Thresholds used in conjunction with the VBMS are trend thresholds that are compared to the trend data indicated by the VBMS. In some embodiments, the trend threshold may be a static trend threshold that is constant or fixed, and that is compared to the VBMS values. In other embodiments, the trend threshold may be an adaptable trend threshold that varies based, for example, on one or more values of the condition indicators, the VBMS values, movement values, volatility values, or the like. The trend threshold permits detection of a condition indicator problem earlier than a static indicator threshold. This is because the trend threshold operates on the changes in the condition indicator values, rather than the values of the condition indicators themselves, as with a static indicator threshold. The trend threshold detects changes in the condition indicator well before a static indicator threshold. While a static indicator threshold may be lowered to detect potential problems in a condition indicator earlier, this may lead to false alarms for noisier signals. Thus, trend detection using a trend threshold tends to provide earlier detection, with fewer false alarms, than static indicator thresholds.

The volatility measure for a noisy signal will typically be greater than the volatility measure for a non-noisy signal, and is particularly useful when, for example, simple statistical indicators-such as standard deviation or kurtosis-indicate no difference or a small difference between the noisy and non-noisy signals. In some embodiments, the volatility measure $V$ at time $t$ can be represented as shown in Equation 1 below, where $V(t)$ is the volatility measure for a particular window and is determined based on a sum of differences between adjacent points in the particular window. In some embodiments, the movement measure $M$ at time $t$ can be represented as shown in Equation 2 below, where $M(t)$ is the movement measure for the particular window.

$$V(t) = \sum_{n=(t-p)}^{t} |X(n) - X(n-1)|$$

Equation 1

$$M(t) = X(t) - X(t - (p + 1))$$

Equation 2

For purposes of both Equation 1 and Equation 2, $X$ is the value of the data being analyzed, such as the condition indicator data, at time $t$ and $(p+1)$ is the size of the window. For example, if the window size is 30 samples, then the value of p would be 29, since $X(n-1)$ would take the calculation back to $X(t-30)$. With particular reference to Equation 2, for illustrative purposes, the movement measure is shown as a difference between a last value and a first value in the window. However, in various embodiments, the movement measure can be calculated as a difference between any two data points in the window. In an example, the movement measure can be calculated as a difference between maximum and minimum values in the window. In another example, the movement can be calculated as a difference between a maximum value in a portion of the window that is configurably close to the end of the window and a minimum value in a portion of the window that is configurably close to the start of the window. In another example, the movement can be calculated as a difference between an average value in a portion of the window that is configurably close to the end of the window and an average value in a portion of the window that is configurably close to the start of the window. Other variations will be apparent to one skilled in the art after reviewing the present disclosure.

In some embodiments, since the volatility measure applies across the entire window and will typically be much larger than the movement value, it may be desirable to create a normalized volatility measure as represented in Equation 3 below, where $V_n(t)$ is the normalized volatility measure for a particular window.

$$V_n(t) = \frac{1}{p+1} \sum_{n=(t-p)}^{t} |X(n) - X(n-1)|$$

Equation 3

In the example of Equation 3, the normalized volatility measure is created by dividing a volatility measure similar to that of Equation 1 by $p+1$, where $p+1$ is the number of data points in the window (i.e., the size of the window). As with Equation 1, $X$ is the value of the data being analyzed, such as the condition indicator data, at time t.

In certain embodiments, a VBMS $\sigma$ at time t can be represented as shown in Equation 4 below, where $\sigma(t)$ is the VBMS for a particular window.

$$\sigma(t) = \frac{M^*(t)}{V^*(t)}$$

Equation 4

In the example of Equation 4, $V^*(t)$ can be a volatility measure as described above relative to Equation 1, a normalized volatility measure as described above relative to Equation 3 or a volatility measure that is created in another suitable way. Similarly, $M^*(t)$ can be a movement measure that is created in any of the ways and variations described above relative to Equation 2 and/or in other suitable ways. In certain embodiments, a ratio of movement to volatility as shown in Equation 4 indicates how significant the movement measure is compared to the volatility measure. For example, in some cases, if the movement measure is the same as a normalized volatility measure, then whatever movement is represented in the movement measure may be deemed non-significant.

In some embodiments, movement significance is a noisy signal and a filtered version is more useful. In certain embodiments, a filtered VBMS $\sigma_F$ at time $t$ can be represented as shown in Equation 5 below, where $\sigma_F(t)$ is the filtered VBMS for a particular window.

$$\sigma_F(t) = F\left(\frac{M^*(t)}{V^*(t)}\right)$$

Equation 5

In the example of Equation 5, $F()$ is a filter function such as, for example, moving average, exponential moving average, low-pass finite impulse response (FIR) filter, Kalman filter, Hodrick-Prescott filter, combinations of the foregoing and/or the like. As mentioned previously, $V^*(t)$ can be a volatility measure as described above relative to Equation 1, a normalized volatility measure as described above relative to Equation 3 and/or a volatility measure created in another suitable way. Similarly, $M^*(t)$ can be a movement measure that is created in any of the ways and variations described above relative to Equation 2 and/or in other suitable ways. In the illustration of Equation 5, the filter function F() is applied to a ratio of the movement measure $M^*(t)$ to the volatility measure $V^*(t)$ to yield the filtered VBMS $\sigma_F$.

In certain embodiments, a trend is indicated when a VBMS value exceeds an applicable trend threshold. In certain embodiments, the trend can be determined according to Equation 6 below.

$$I(t) = \begin{cases} 0, & \sigma^*(t) < Threshold \\ 1, & \sigma^*(t) \geq Threshold \end{cases}$$

Equation 6

One modification to the thresholding could be to have different thresholds to transition from one state to another; this is referred to as "threshold hysteresis." Here, while the indicator may transition from 0 to 1 when the VBMS is above a value of E, it would not transition from 1 to 0 unless the VBMS was below a value of F, where F < E. These two-sided thresholds, which are different depending on the state transition, serve to reduce dither (i.e., rapid switching between states) when the VBMS is close to the threshold.

In the example of Equation 6, $I(t)$ is a trend indicator function, with a 1 for $I(t)$ indicating a trend and a 0 for $I(t)$ indicating no trend. Also in the example of Equation 6, $\sigma^*(t)$ can be determined or created in any of the ways and variations described above relative to Equation 4 and Equation 5 and/or in other suitable ways. For example, $\sigma^*(t)$ can represent unfiltered VBMS values according to Equation 4 or filtered VBMS values according to Equation 5. By way of further example, $\sigma^*(t)$ can utilize normalized volatility measures according to Equation 3 or non-normalized volatility measures according to Equation 1.

In various embodiments, trend indication can be dynamically variable in an implementation environment. Examples will be described relative to Equations 7-9, each of which illustrates trend indication being executed differently for different values of the data being analyzed. For example, in some embodiments, VBMS filtering can introduce a phase lag in trend indication, which lag results in a later indication of a trend. In some cases, less filtering via, for example, different low-pass filter frequency or a smaller moving-average window, can produce less phase lag and earlier trend indications with a tradeoff of more noise, where the additional noise may result in what are retrospectively determined to be false-positive trend indications. However, there may be cases where the potentially false-positive trend indications are less burdensome or even desirable such as, for example, when the value of the data being analyzed is relatively close to a static trend threshold. Conversely, the false-positive trend indications can be more burdensome and less desirable when, for example, the value of the data being trended is very far from the static trend threshold (e.g., low in absolute value).

In certain embodiments, Equation 7 below can be used to address the above-described scenario of the varying importance of potentially false-positive trend indications. In Equation 7, trend indication is determined using different filter functions based on how $X$, the value of the data being analyzed, compares to $Y$. As shown, a filtered VBMS $\sigma_{F1}$ and a filtered VBMS $\sigma_{F2}$ can be created using filter functions $F_1()$ and $F_2()$, respectively, where $F_1()$ and $F_2()$ are representative of different filter functions. $M^*(t)$ and $V^*(t)$ are a movement measure and a volatility measure, respectively, and can be determined in any of the ways described previously. In this fashion, an applicable filter function can be selected, from a plurality of filter functions, based at least in part on the value of the data being analyzed. In some cases, one of the filter functions can be representative of an unfiltered setting such that no filter function is applied. Although two filter functions are shown for simplicity of illustration, it should be appreciated that three, four or any other suitable number of filter functions could also be utilized to suit a given implementation.

$$\sigma_{F1}(t) = F_1\left(\frac{M^*(t)}{V^*(t)}\right)$$

$$\sigma_{F2}(t) = F_2 \left( \frac{M^*(t)}{V^*(t)} \right)$$

$$For \ X(t) < Y: \quad I(t) = \begin{cases} 0, & \sigma_{F1}(t) < Threshold \\ 1, & \sigma_{F1}(t) \geq Threshold \end{cases}$$

$$For \ X(t) \geq Y: \quad I(t) = \begin{cases} 0, & \sigma_{F2}(t) < Threshold \\ 1, & \sigma_{F2}(t) \geq Threshold \end{cases}$$

**Equation 7**

Equation 7 uses X(t), which is the most recent value of the condition indicator data being analyzed. However, this concept could be generalized to include other options. For example, a characteristic value $X^*(t)$ could be used, such that $X^*(t)$ is calculated from all or some of the values in the window. Given a function G, $X^*(t) = G(X(t) : X(t-q))$, where the function G() may be maximum, average, median, mode, or another function and the value $q \leq p$ (i.e., some or all of the window values may be used). A new version of Equation 7 or a separate equation that has $X^*(t)$ rather than just X(t), may be employed. One example of this might be a characteristic value that is the maximum of the last 5 data points in the window that is compared to the value Y in equation 7.

In some embodiments, trend indication can be variable in at least partial dependence on the number of data points p in the window, where the window size is *(p+1)*. In some cases, larger VBMS window sizes can introduce slower reaction to changes. A smaller VBMS window size may be more responsive to changes and give earlier indications, but at the expense of more false alarms. In Equation 8 below, trend indication is executed using different window sizes based on how *X,* the value of the data being analyzed, compares to Y, where a smaller window size is employed at higher values. In particular, for purposes of this illustrative example, a VBMS $\sigma^*_{p=2a}$ can use *(2a)* data points for a window size of *(2a + 1)* and a VBMS $\sigma^*_{p=a}$ can use *(a)* data points for window size of *(a+1)*. VBMS $\sigma^*_{p=2a}(t)$ and $\sigma^*_{p=a}(t)$ can be determined or created in any of the ways and variations described above relative to Equation 4 and Equation 5 and/or in other suitable ways. In this fashion, an applicable window size can be selected, from a plurality of window sizes, based at least in part on the value of the data being analyzed. Although two window sizes are shown for simplicity of illustration, it should be appreciated that three, four or any other suitable number of window sizes could also be utilized to suit a given implementation.

$$For \ X(t) < Y: \quad I(t) = \begin{cases} 0, & \sigma^*_{p=2a}(t) < Threshold \\ 1, & \sigma^*_{p=2a}(t) \geq Threshold \end{cases}$$

$$For \ X(t) \geq Y: \quad I(t) = \begin{cases} 0, & \sigma^*_{p=a}(t) < Threshold \\ 1, & \sigma^*_{p=a}(t) \geq Threshold \end{cases}$$

**Equation 8**

In some embodiments, trend thresholds can be variable, such that trend indication is varied by applying different trend thresholds at different times. In Equation 9 below, different trend thresholds are utilized based on how *X,* the value of the data being analyzed, compares to *Y.* VBMS $\sigma^*(t)$ can be determined or created in any of the ways and variations described above relative to Equation 4 and Equation 5 and/or in other suitable ways. Although two trend thresholds are shown for simplicity of illustration, it should be appreciated that three, four or any other suitable number of trend thresholds could also be utilized to suit a given implementation.

$$For\ X(t) < Y:\quad I(t) = \begin{cases} 0, & \sigma^*(t) < Threshold\ 1 \\ 1, & \sigma^*(t) \geq Threshold\ 1 \end{cases}$$

$$For\ X(t) \geq Y:\quad I(t) = \begin{cases} 0, & \sigma^*(t) < Threshold\ 2 \\ 1, & \sigma^*(t) \geq Threshold\ 2 \end{cases}$$

## Equation 9

In various embodiments, trend thresholds can be similarly variable in the fashion described above relative to Equation 9 whenever two or more ways of determining VBMS values are established. For example, with reference to Equation 7, different thresholds could be applied to the filtered VBMS $\sigma_{F1}$ and the filtered VBMS $\sigma_{F2}$. In another example, with reference to Equation 8, different thresholds could be applied to the VBMS $\sigma^*_{p=2a}$ and the VBMS $\sigma^*_{p=a}$. Other examples and variations will be apparent to one skilled in the art after reviewing the present disclosure.

In some embodiments, multiple trend indicator functions can be defined to enable indications of multiple types of trends. In Equation 10 below, trend indicator functions $I_1(t)$ and $I_2(t)$ are defined such that, for each function, a 1 indicates a trend and a 0 indicates no trend. Also in Equation 10, different trend thresholds are utilized in each function. VBMS $\sigma^*(t)$ can be determined or created in any of the ways and variations described above relative to Equation 4 and Equation 5 and/or in other suitable ways. Although two trend indicator functions are shown for simplicity of illustration, it should be appreciated that three, four or any other suitable number of functions could also be utilized to suit a given implementation.

$$I_1(t) = \begin{cases} 0, & \sigma^*(t) < Threshold\ 1 \\ 1, & \sigma^*(t) \geq Threshold\ 1 \end{cases}$$

$$I_2(t) = \begin{cases} 0, & \sigma^*(t) < Threshold\ 2 \\ 1, & \sigma^*(t) \geq Threshold\ 2 \end{cases}$$

## Equation 10

Modified indicator functions $I^*(t)$, where $I^*(t) = H(\ I(t)\ )$ can be used, where H is a function that could be an "M out of N" filter in which the modified indicator function does not change from 0 to 1 until the at least M out of N of the last raw indicator values were 1. For example, If N = 5 and M = 3, the raw indicator value would have to be 1 for at least 3 out of the last 5 points from the modified indicator function to change to 1. This amounts to windowing of the indicator and could be applied to any change (up or down) of the indicator.

Still with reference to Equation 10, in an example, $I_1(t)$ can be defined to indicate a trend in a direction of particular concern (e.g., up or increasing in value) while $I_2(t)$ can be defined to indicate a reverse trend in a direction opposite the direction of particular concern (e.g., down or decreasing). In the case of a value trending upwards being the direction of particular concern, a sudden downward trend may be indicative of a change in the system, such as a maintenance action, that could invalidate VBMS trend analysis for a time. In such cases, it may be advantageous to reset the window used for VBMS to start after the sudden downward trend occurs. According to this example, $I_1(t)$ can be used for alerting and other purposes as described previously while $I_2(t)$ can be used as a trigger for window resetting. In particular, in response to $I_2(t)$ indicating a reverse trend, the window used for the movement and volatility components of VMBS $\sigma^*(t)$ can be reset to start at either the point at which the reverse trend is indicated or a configurable point thereafter.

In some embodiments, trends, including reverse trends, can be manually indicated or automatically indicated in other suitable ways such as via statistical methods. For example, statistical methods can be executed to find immediate changes in data which may not be immediately apparent, for example, from a filtered VBMS signal. In an example, a statistical outlier detector set to a window size similar to that used in VBMS trend analysis (e.g., 15-45 points) and a large statistical bounds (e.g., mean plus three to five standard deviations) could supplement a VBMS indicator. For example, if a VBMS trend analysis and a statistical analysis were to be executed in parallel, a trend indication could be made based on both analyses indicating a trend. In some cases, such as with reverse trends, a statistical method might be used by itself.

In various embodiments, the methodologies described relative to Equations 7-10 can be used in combination to include, for example, multiple filters, multiple window sizes, multiple trend thresholds, multiple trend indicator functions and/or statistical analysis. In addition, although trends are described by way of illustration as being upward or downward trends in particular examples, one of ordinary skill in the art will appreciate that the same principles can also be applied to trends in the reverse direction from that which is described.

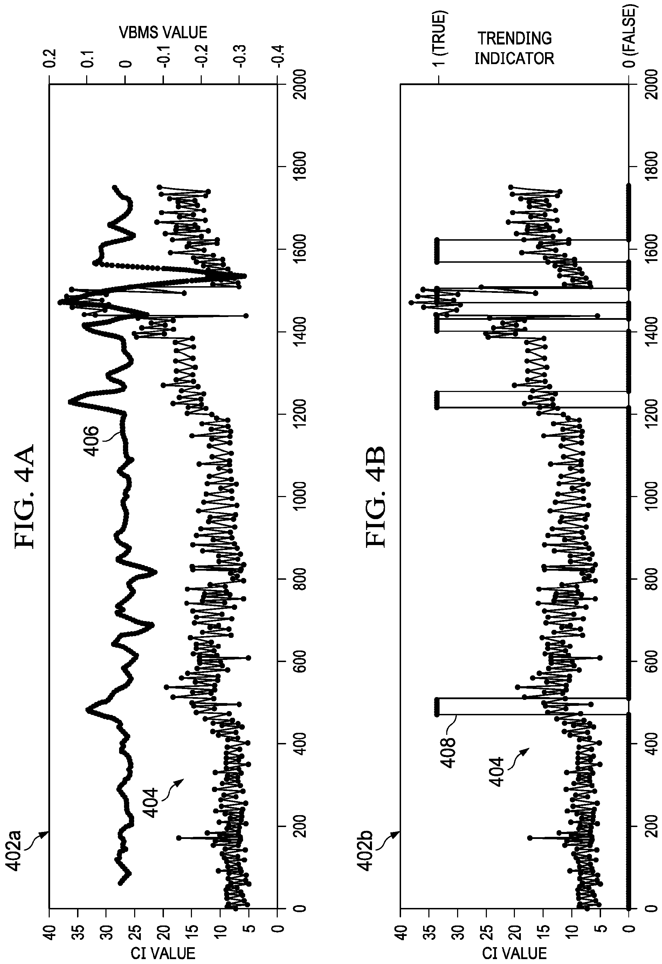

FIGS. 4A-B illustrate an example of VBMS trend analysis using example condition indicator data 404. FIG. 4A is a graph 402a that includes the condition indicator data 404 and VBMS values 406. The graph 402a plots the example condition indicator data 404 according to a first y-axis on the left, and the VBMS values 406 according to a second y-axis on the right. The VBMS values 406 may be calculated as shown in Equation 5 using a window size of 30 data points and a 30-point moving-average filter function.

FIG. 4B is a graph 402b that illustrates a trend indication 408 according to the example of FIG. 4A. The graph 402b plots the example condition indicator data 404 according to a first y-axis on the left, and the trend indication 408 according to a second y-axis on the right, where 1 (true) indicates a trend is present, while 0 (false) indicates a trend is not present. The trend indication 408 may be determined, for example, using Equation 6 above. In this example, the trend indication 408 is a result of applying a static trend threshold of 0.05 to the VBMS values 406 of FIG. 4A.

In some embodiments, the VBMS trend analysis of the condition indicator data 404 can be improved via window resetting as described by way of example above with reference to Equation 10. For example, in FTG. 4A, the VBMS values 406 are shown to sharply decline between index 1400 and index 1500. In some cases, this sharp decline can delay indication of an upward trend that is shown shortly thereafter. In certain embodiments, the window can be reset upon an indication of the reverse trend between index 1400 and index 1500. Advantageously, in certain embodiments, this resetting of the window can facilitate faster indication of the upward trend.

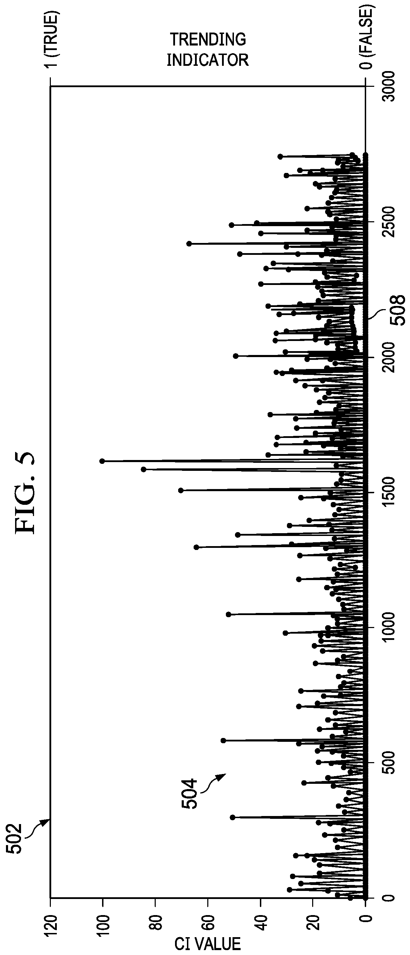

FIG. 5 is a graph 502 illustrating a trend indication 508 for noisy condition indicator data 504. The graph 502 plots the noisy condition indicator data 504 according to first y-axis on the left, and the trend indication 508 according to a second y-axis on the right. The trend indication 508 may be determined as described relative to Equation 6 using a window size of 30 data points, a 30-point moving-average filter function and a static trend threshold of 0.05. In this example, the trend indication 508 indicates no resultant trend despite the large amount of noise in the noisy condition indicator data 504.

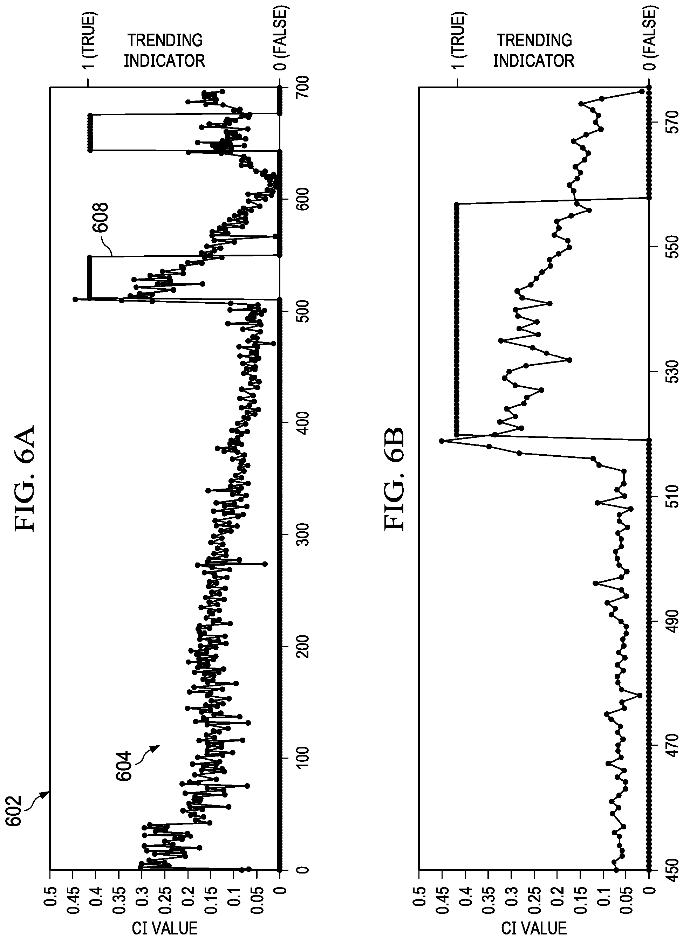

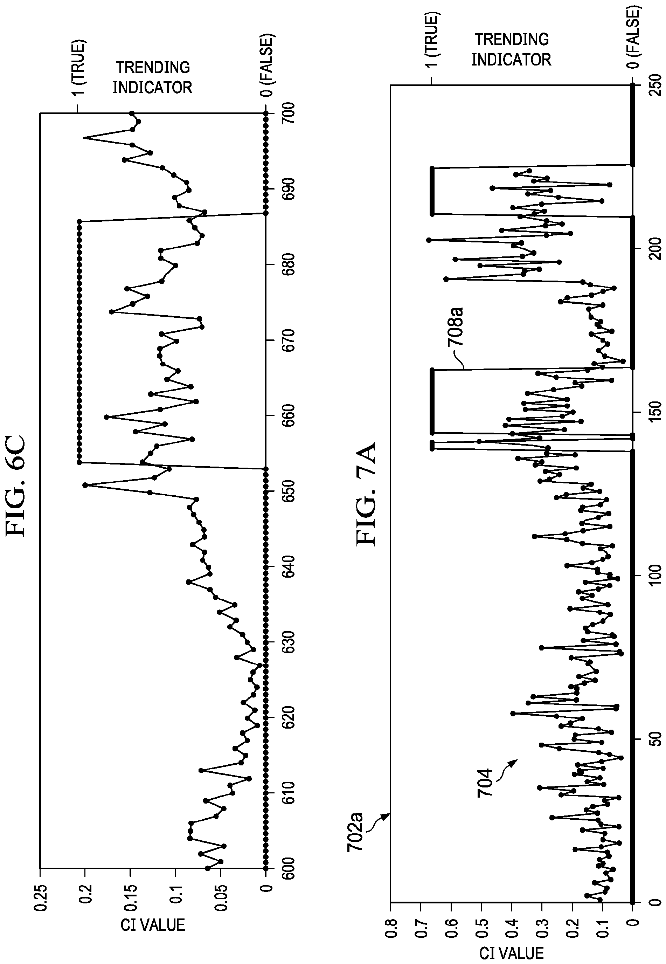

FIG. 6A is a graph 602 illustrating a trend indication 608 for condition indicator data 604. The graph 602 plots the condition indicator data 604 according to first y-axis on the left, and the trend indication 608 according to a second y-axis on the right. The trend indication 608 may be determined as described relative to Equation 6 using a window size of 30 data points, a 30-point moving-average filter function and a static trend threshold of 0.05. In this example, the trend indication 608 indicates two trends in the condition indicator data 604. FIG. 6B shows a zoomed-in view of the first trend, while FIG. 6C shows a zoomed-in view of the second trend.

FIGS. 7A-C illustrate the applicability of different windows sizes to example condition indicator data 704. FIG. 7A is a graph 702a illustrating a trend indication 708a for the condition indicator data 704. The graph 702 plots the condition indicator data 704 according to first y-axis on the left, and the trend indication 708a according to a second y-axis on the right. In the example of FIG. 7A, the trend indication 708a is determined as described relative to Equation 6 using a window size of 30 data points, a 30-point moving-average filter function and a static trend threshold of 0.05. According to this example, some dither (between a trend being indicated or not) is observable between index 140 and 150. Also, the trend beginning just before index 200 is not indicated until more than 15 data points after the observable change in behavior.

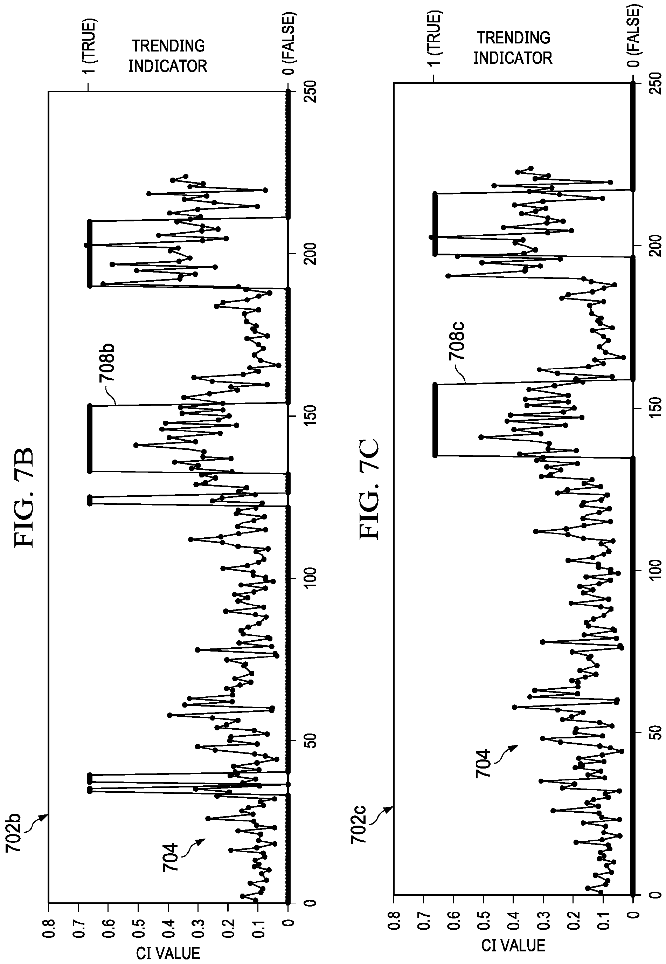

FIG. 7B is a graph 702b illustrating a trend indication 708b for the condition indicator data 704 of FIG. 7A. In the example of FIG. 7B, the trend indication 708b is determined as described relative to Equation 6 using a window size of 15 data points, a 15-point moving-average filter function and a static trend threshold of 0.05. As compared to FIG. 7A, the trend indication 708b shows an additional trend at approximately index 40, but it can be retrospectively observed that this trend may be a false alarm. However, as compared to the trend indication 708a of FIG. 7A, the trend indication 708b is much more responsive to the trend beginning just before index 200.

FIG. 7C is a graph 702c illustrating a trend indication 708c for the condition indicator data 704 of FIGS. 7A-B. In the example of FIG. 7C, the trend indication 708c is determined as described relative to Equation 6 using a window size of 30 data points, a 15-point moving-average filter function and a static trend threshold of 0.05. The methodology illustrated in FIG. 7C represents a middle ground relative to FIGS. 7A-B. In particular, as compared to the trend indication 708b of FIG. 7B, the trend indication 708c does not introduce a false alarm at approximately index 40. Additionally, as compared to the trend indication 708a, the trend indication 708c succeeds in improving the lag to indicate the trend beginning just before index 200.

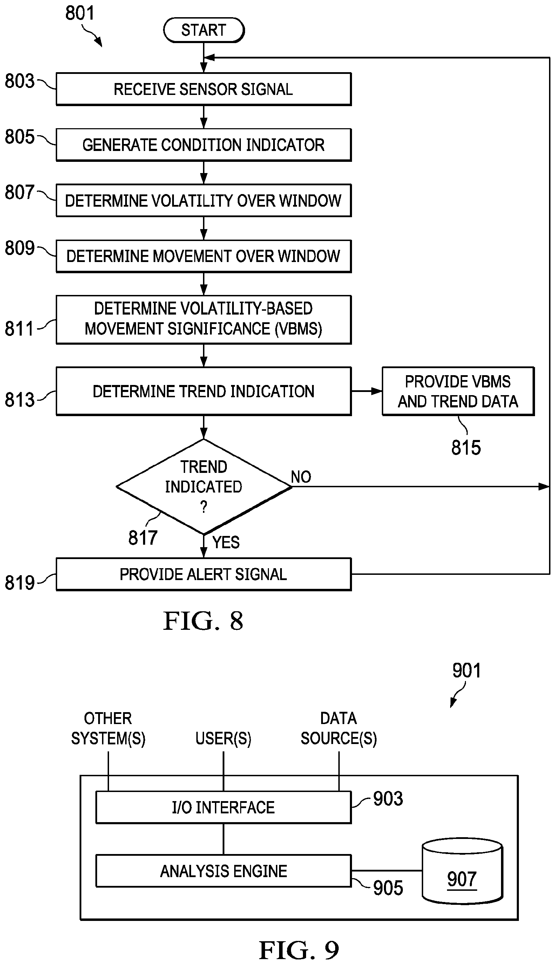

FIG. 8 is a flow diagram illustrating a method 801 for providing an alert signal for condition indicator trends according to some embodiments. The method 801 may be performed by a system having a data terminal and data server, and may be embodied in a software program stored on a non-transitory computer-readable storage medium that is executed by a processor of the data terminal and a processor of the data server.

In block 803, one or more sensor signals are received. In some embodiments, a sensor generates the sensor signal and provides the sensor signal to a data collection element in a data terminal. The sensor may continuously send the sensor signal for sampling by the data collection element, may send the sensor signal in response to a query, activation signal or the like, may send the sensor signal in response to a predetermined condition, may store the sensor signal for processing at the sensor device, or may send or provide the signal according to another procedure. A condition indicator is generated in block 805. In some embodiments, one or more condition indicators are generated from a sensor signal, with different condition indicators being derived from different subsignals in the sensor signal. In other embodiments, multiple readings from a sensor, or readings from multiple sensors may be combined or otherwise used to generate the condition indicator. For example, data signals form an accelerometer and from a tachometer may be used to generate synchronous time average vibration data or condition indicators. Additionally, the condition indicator may be generated at the sensor, at a data terminal or at a data server. Each condition indicator that is generated through iterations through the block 805 is added to a condition indicator set in relation to its associated time.

In block 807, a volatility over a window of the condition indicator set is determined based, at least in part, on differences between adjacent data points in the window. As described previously, a size of the window can be configurable and dynamically variable to suit a given implementation. The volatility can be determined as described above, for example, with respect to Equation 1 and/or Equation 3. In block 809, a movement over the window of the condition indicator set is determined based, at least in part, on a difference between two selected data points in the window. The movement can be determined as described above, for example, with respect to Equation 2. In block 811, a VBMS over the window of the condition indicator set is determined based, at least in part, on a ratio of the movement to the volatility. The VBMS can be determined as described above, for example, with respect to Equation 4 and/or Equation 5.

In block 813, a trend indication for the window is determined based, at least in part, on the VBMS. In general, the trend indication can be determined via one or more trend indicator functions as described previously, for example, with respect to Equations 6-10. In some embodiments, the VBMS and trend data are provided in block 815. In some embodiments, the VBMS and trend data may be provided through a data server as part of a chart, report, display or the like.

In block 817, a determination is made on whether a trend is indicated. If a determination is made at the block 817 that a trend is indicated, then an alert signal is provided in block 819. In some embodiments, the alert system or data server may activate an in-vehicle alert, for example, by lighting a trouble lamp in a vehicle cockpit, displaying a warning message on a cockpit display, or by providing an out-of-vehicle message by automatically message a fleet operator, vehicle owner, maintenance technician, or the like by email, short messaging system (SMS) message, text message, automated voice call, or the like. In some embodiments, the alert system may generate an alert and display an indicator on a management web page, maintenance checklist, vehicle record, or the like. In some embodiments, the alert signal is a problem report generated by a data server indicating a problem or warning for the system or element related to the condition indicators. Additionally, the alert system may indicate a level of problem or alert, for example, by providing an alert severity. In some embodiments, an in-vehicle alert and a remote alert may be used in combination. In some embodiments, the alert signal can trigger other actions such as, for example, a resetting of the window as described previously.

The collection of sensor data and the determinations of the volatility, movement, VBMS and trend indication(s) may be repeated any number of times and performed periodically or continuously. Thus, for example, from block 819, the method 801 can return to the block 803 and operate as described previously The method 801 can similarly return to the block 803 if, for example, a determination is made at the block 817 that a trend is not indicated. In various embodiments, the method 801 can execute continuously until it is terminated by a user or suitable stop criteria is satisfied such as, for example, vehicle shutdown, mission completion, and/or the like.

FIG. 9 is a diagram illustrating a computer system 901 that may be used to implement a system, data terminal, or data server according to some embodiments. The computer system 901 can include an input/output (I/O) interface 903, an analysis engine 905, and a database 907. Alternative embodiments can combine or distribute the I/O interface 903, the analysis engine 905, and the database 907, as desired. Embodiments of the computer system 901 may include one or more computers that include one or more processors and memories configured for performing tasks described herein. This can include, for example, a computer having a central processing unit (CPU) and non-volatile memory that stores software instructions for instructing the CPU to perform at least some of the tasks described herein. This can also include, for example, two or more computers that are in communication via a computer network, where one or more of the computers include a CPU and non-volatile memory, and one or more of the computer's non-volatile memory stores software instructions for instructing any of the CPU(s) to perform any of the tasks described herein. Thus, while the exemplary embodiment is described in terms of a discrete machine, it should be appreciated that this description is non-limiting, and that the present description applies equally to numerous other arrangements involving one or more machines performing tasks distributed in any way among the one or more machines. It should also be appreciated that such machines need not be dedicated to performing tasks described herein, but instead can be multi-purpose machines, for example computer workstations, that are suitable for also performing other tasks.

The I/O interface 903 can provide a communication link between external users, systems, and data sources and components of the computer system 901. The I/O interface 903 can be configured for allowing one or more users to input information to the computer system 901 via any known input device. Examples can include a keyboard, mouse, touch screen, and/or any other desired input device. The I/O interface 903 can be configured for allowing one or more users to receive information output from the computer system 901 via any known output device. Examples can include a display monitor, a printer, cockpit display, and/or any other desired output device. The I/O interface 903 can be configured for allowing other systems to communicate with the computer system 901. For example, the I/O interface 903 can allow one or more remote computer(s) to access information, input information, and/or remotely instruct the computer system 901 to perform one or more of the tasks described herein. The I/O interface 903 can be configured for allowing communication with one or more remote data sources. For example, the I/O interface 903 can allow one or more remote data source(s) to access information, input information, and/or remotely instruct the computer system 901 to perform one or more of the tasks described herein.

The database 907 provides persistent data storage for the computer system 901. Although the term "database" is primarily used, a memory or other suitable data storage arrangement may provide the functionality of the database 907. In alternative embodiments, the database 907 can be integral to or separate from the computer system 901 and can operate on one or more computers. The database 907 preferably provides non-volatile data storage for any information suitable to support the operation of the fly-by-wire flight control system 201 and the method 500, including various types of data discussed further herein. The analysis engine 905 can include various combinations of one or more processors, memories, and software components.

Herein, reference to a computer-readable storage medium encompasses one or more tangible computer-readable storage media possessing structures. As an example, and not by way of limitation, a computer-readable storage medium may include a semiconductor-based or other integrated circuit (IC) (such, as for example, a field-programmable gate array (FPGA) or an application-specific IC (ASIC)), a hard disk, an HDD, a hybrid hard drive (HHD), an optical disc, an optical disc drive (ODD), a magneto-optical disc, a magneto-optical drive, a floppy disk, a floppy disk drive (FDD), magnetic tape, a holographic storage medium, a solid-state drive (SSD), a RAM-drive, a SECURE DIGITAL card, a SECURE DIGITAL drive, a flash memory card, a flash memory drive, or any other suitable tangible computer-readable storage medium or a combination of two or more of these, where appropriate.

Herein, reference to encoded software may encompass one or more applications, bytecode, one or more computer programs, one or more executables, one or more instructions, logic, machine code, one or more scripts, or source code, and vice versa, where appropriate, that have been stored or encoded in a computer-readable storage medium. In particular embodiments, encoded software includes one or more application programming interfaces (APIs) stored or encoded in a computer-readable storage medium. Particular embodiments may use any suitable encoded software written or otherwise expressed in any suitable programming language or combination of programming languages stored or encoded in any suitable type or number of computer-readable storage media. In particular embodiments, encoded software may be expressed as source code or object code. In particular embodiments, encoded software is expressed in a higher-level programming language, such as, for example, C, Perl, or a suitable extension thereof.

In particular embodiments, encoded software is expressed in a lower-level programming language, such as assembly language (or machine code). In particular embodiments, encoded software is expressed in JAVA. In particular embodiments, encoded software is expressed in Hyper Text Markup Language (HTML), Extensible Markup Language (XML), or other suitable markup language.

**Claims**

1. A method (801) comprising:

   acquiring (803, 805) a current condition indicator of a condition indicator set associated with an operating condition of a vehicle (101), the condition indicator set indicating sensor readings associated with an operating element of the vehicle (101) under the operating condition;
   determining (807), by a data server (305), a volatility $V(t)$ at a time $t$ over a window of size $p+1$ samples of the condition indicator set based, at least in part, on a sum of differences between adjacent data points in the window, wherein the window includes the current condition indicator $X(t)$ at time $t$, such that

   $$V(t) = \sum_{n=(t-p)}^{t} |X(n) - X(n-1)|$$ ;

   determining (808), by the data server (305), a movement $M(t)$ over the window of the condition indicator set based, at least in part, on a difference between two selected data points in the window;
   determining (811) a volatility-based movement significance $\sigma(t)$ at the time $t$ over the window of the condition indicator set based, at least in part, on a ratio of the movement to the volatility, such that $\sigma(t) = \frac{M(t)}{V(t)}$ ;
   determining (813, 817), by the data server (305), whether a trend associated with the operating element is indicated based, at least in part, on the volatility-based movement significance; and
generating (819), by the data server (305), an alert signal in response to the determining that the trend is indicated.

2. The method (801) of claim 1, wherein the determining the volatility (811) comprises creating a normalized volatility based, at least in part, on a number of data points in the window of the condition indicator set.

3. The method (801) of claim 1 or claim 2, wherein the movement over the window of the condition indicator set is based, at least in part, on:

a difference between maximum and minimum values in the window of the condition indicator set; and/or
a difference between a last value and a first value in the window.

4. The method (801) of any preceding claim, wherein the determining the volatility-based movement significance comprises:

applying a filter function to the ratio of the movement to the volatility; and/or
selecting the filter function, from a plurality of filter functions, based at least in part on a value of the current condition indicator.

5. The method (801) of any preceding claim, wherein the determining whether a trend associated with the operating element is indicated comprises comparing the volatility-based movement significance to a trend threshold, wherein the determining the volatility-based movement significance optionally comprises selecting the trend threshold, from a plurality of trend thresholds, based at least in part on a value of the current condition indicator.

6. The method (801) of any preceding claim, wherein the window of the condition indicator set is of a variable size in at least partial dependence on a value of the current condition indicator, wherein the determining the volatility-based movement significance optionally comprises selecting a size of the window of the condition indicator set, from a plurality of window sizes, based at least in part on the value of the current condition indicator.

7. The method (801) of any preceding claim, comprising:

executing a statistical analysis of the window of the condition indicator set,
wherein the determining whether a trend associated with the operating element is indicated is based, at least in part, on the statistical analysis.

8. The method (801) of any preceding claim, comprising, responsive to a reverse trend indication, resetting the window to start on or after a point of the reverse trend indication.

9. A computer system (301) comprising a processor and memory, wherein the processor and the memory in combination are configured to perform the method (801) according to any preceding claim.

10. A computer-program product comprising a non-transitory computer-usable medium having computer-readable program code embodied therein, the computer-readable program code adapted to be executed to implement the method (801) according to any one of claims 1 to 8.

**Patentansprüche**

1. Verfahren (801), umfassend:

Erfassen (803, 805) eines aktuellen Bedingungsindikators aus einer Bedingungsindikatorgruppe, die einer Betriebsbedingung eines Fahrzeugs (101) zugeordnet ist, wobei die Bedingungsindikatorgruppe Sensormessungen anzeigt, die einem Betriebselement des Fahrzeugs (101) unter Betriebsbedingungen zugeordnet sind;

Ermitteln (807), durch einen Datenserver (305), einer Unbeständigkeit $V(t)$ zu einem Zeitpunkt $t$ im Verlauf eines Fensters der Größe von $p + 1$ Abtastwerten der Bedingungsindikatorgruppe mindestens teilweise aufgrund einer Summe von Differenzen zwischen benachbarten Datenpunkten in dem Fenster, wobei das Fenster den aktuellen Bedingungsindikator $X(t)$ zum Zeitpunkt $t$ beinhaltet, sodass

$$V(t) = \sum_{n=(t-p)}^{t} |X(n) - X(n-1)| \text{ ist;}$$

Ermitteln (808), durch den Datenserver (305), einer Bewegung *M(t)* im Verlauf des Fensters der Bedingungsindikatorgruppe mindestens teilweise aufgrund einer Differenz zwischen zwei ausgewählten Datenpunkten in dem Fenster;
Ermitteln (811) einer unbeständigkeitsbasierten Bewegungssignifikanz $\sigma(t)$ zum Zeitpunkt $t$ im Verlauf des Fensters der Bedingungindikatorgruppe mindestens teilweise aufgrund eines Verhältnisses der Bewegung

zur Unbeständigkeit, sodass $\sigma(t) = \frac{M(t)}{V(t)}$ ist;

Ermitteln (813, 817), durch den Datenserver (305), ob ein Trend, der dem Betriebselement zugeordnet ist, mindestens teilweise aufgrund der unbeständigkeitsbasierten Bewegungssignifikanz angezeigt wird; und
Erzeugen (819), durch den Datenserver (305), eines Warnsignals als Reaktion auf das Ermitteln, dass der Trend angezeigt wird.

2. Verfahren (801) nach Anspruch 1, wobei das Ermitteln der Unbeständigkeit (811) ein Erstellen einer normalisierten Unbeständigkeit mindestens teilweise aufgrund einer Anzahl von Datenpunkten in dem Fenster der Bedingungsindikatorgruppe umfasst.

3. Verfahren (801) nach Anspruch 1 oder Anspruch 2, wobei die Bewegung im Verlauf des Fensters der Bedingungsindikatorgruppe mindestens teilweise beruht auf:

   einer Differenz zwischen maximalen und minimalen Werten in dem Fenster der Bedingungsindikatorgruppe; und/oder
   einer Differenz zwischen einem letzten und einem ersten Wert in dem Fenster.

4. Verfahren (801) nach einem der vorhergehenden Ansprüche, wobei das Ermitteln der unbeständigkeitsbasierten Bewegungssignifikanz umfasst:

   Anwenden einer Filterfunktion auf das Verhältnis der Bewegung zur Unbeständigkeit; und/oder
   Auswählen der Filterfunktion aus einer Vielzahl von Filterfunktionen mindestens teilweise aufgrund eines Werts des aktuellen Bedingungsindikators.

5. Verfahren (801) nach einem der vorhergehenden Ansprüche, wobei das Ermitteln, ob ein Trend angezeigt wird, der dem Betriebselement zugeordnet ist, ein Vergleichen der unbeständigkeitsbasierten Bewegungssignifikanz mit einem Trendschwellenwert umfasst, wobei das Ermitteln der unbeständigkeitsbasierten Bewegungssignifikanz optional ein Auswählen des Trendschwellenwerts aus einer Vielzahl von Trendschwellenwerten mindestens teilweise aufgrund eines Werts des aktuellen Bedingungsindikators umfasst.

6. Verfahren (801) nach einem der vorhergehenden Ansprüche, wobei das Fenster der Bedingungsindikatorgruppe eine variable Größe in mindestens einer teilweisen Abhängigkeit von einem Wert des aktuellen Bedingungsindikators aufweist, wobei das Ermitteln der unbeständigkeitsbasierten Bewegungssignifikanz optional ein Auswählen einer Größe des Fensters der Bedingungsindikatorgruppe aus einer Vielzahl von Fenstergrößen mindestens teilweise aufgrund des Werts des aktuellen Bedingungsindikators umfasst.

7. Verfahren (801) nach einem der vorhergehenden Ansprüche, umfassend:

   Ausführen einer statistischen Analyse des Fensters der Bedingungsindikatorgruppe,
   wobei das Ermitteln, ob ein Trend angezeigt wird, der dem Betriebselement zugeordnet ist, mindestens teilweise auf der statistischen Analyse beruht.

8. Verfahren (801) nach einem der vorhergehenden Ansprüche, das als Reaktion auf eine umgekehrte Trendanzeige ein Zurücksetzen des Fensters umfasst, um an oder nach einem Punkt der umgekehrten Trendanzeige zu beginnen.

9. Computersystem (301) das einen Prozessor und einen Speicher umfasst, wobei der Prozessor und der Speicher in einer Kombination konfiguriert sind das Verfahren (801) nach einem der vorhergehenden Ansprüche durchzuführen.

10. Computerprogrammprodukt, das ein nicht-flüchtiges computernutzbares Medium umfasst, in dem ein computerlesbarer Programmcode abgelegt ist, wobei der computerlesbare Programmcode geeignet ist, um zum Implementieren des Verfahrens (801) nach einem der Ansprüche 1 bis 8 ausgeführt zu werden.

**Revendications**

1. Procédé (801) comprenant :

   l'acquisition (803, 805) d'un indicateur d'état actuel d'un ensemble d'indicateurs d'état associé à un état de fonctionnement d'un véhicule (101), l'ensemble d'indicateurs d'état indiquant des lectures de capteurs associées à un élément de fonctionnement du véhicule (101) dans l'état de fonctionnement ;
   la détermination (807), par un serveur de données (305), d'une volatilité $V(t)$ à un temps t sur une fenêtre de taille $p+1$ échantillons de l'ensemble d'indicateurs d'état sur la base, au moins en partie, d'une somme de différences entre des points de données adjacents dans la fenêtre, dans lequel la fenêtre comprend l'indicateur d'état actuel $X(t)$ au temps t, de telle manière que $$V(t) = \sum_{n=(t-p)}^{nt} |X(n) - X(n-1)|$$ ;
   la détermination (808), par le serveur de données (305), d'un mouvement $M(t)$ sur la fenêtre de l'ensemble d'indicateurs d'état sur la base, au moins en partie, d'une différence entre deux points de données sélectionnés dans la fenêtre ;
   la détermination (811) d'une significativité de mouvement à base de volatilité $\sigma(t)$ au temps t sur la fenêtre de l'ensemble d'indicateurs d'état sur la base, au moins en partie, d'un rapport du mouvement à la volatilité, de telle manière que $$\sigma(t) = \frac{M(t)}{V(t)}$$ ;
   la détermination (813, 817), par le serveur de données (305), du fait de savoir si une tendance associée à l'élément de fonctionnement est indiquée sur la base, au moins en partie, de la significativité de mouvement à base de volatilité ; et
   la génération (819), par le serveur de données (305), d'un signal d'alerte en réponse à la détermination du fait que la tendance est indiquée.

2. Procédé (801) selon la revendication 1, dans lequel la détermination de la volatilité (811) comprend la création d'une volatilité normalisée sur la base, au moins en partie, d'un nombre de points de données dans la fenêtre de l'ensemble d'indicateurs d'état.

3. Procédé (801) selon la revendication 1 ou la revendication 2, dans lequel le mouvement sur la fenêtre de l'ensemble d'indicateurs d'état est basé, au moins en partie, sur :

   une différence entre des valeurs maximales et minimales dans la fenêtre de l'ensemble d'indicateurs d'état ; et/ou
   une différence entre une dernière valeur et une première valeur dans la fenêtre.

4. Procédé (801) selon l'une quelconque des revendications précédentes, dans lequel la détermination de la significativité de mouvement à base de volatilité comprend :

   l'application d'une fonction de filtrage au rapport entre le mouvement et la volatilité ; et/ou
   la sélection de la fonction de filtrage, parmi une pluralité de fonctions de filtrage, sur la base au moins en partie d'une valeur de l'indicateur d'état actuel.

5. Procédé (801) selon la revendication précédente, dans lequel la détermination du fait de savoir si une tendance associée à l'élément de fonctionnement est indiquée comprend la comparaison de la significativité de mouvement à base de volatilité à un seuil de tendance, dans lequel la détermination de la significativité de mouvement à base de volatilité comprend facultativement la sélection du seuil de tendance, parmi une pluralité de seuils de tendance, sur la base au moins en partie d'une valeur de l'indicateur d'état actuel.

6. Procédé (801) selon l'une quelconque des revendications précédentes, dans lequel la fenêtre de l'ensemble d'indicateurs d'état est de taille variable en fonction au moins partiellement d'une valeur de l'indicateur d'état actuel, dans lequel la détermination de la significativité de mouvement à base de volatilité comprend facultativement la sélection d'une taille de la fenêtre de l'ensemble d'indicateurs d'état, parmi une pluralité de tailles de fenêtre, sur la base au moins en partie de la valeur de l'indicateur d'état actuel.

**7.** Procédé (801) selon l'une quelconque des revendications précédentes, comprenant :

l'exécution d'une analyse statistique de la fenêtre de l'ensemble d'indicateurs d'état,
dans lequel la détermination du fait de savoir si une tendance associée à l'élément de fonctionnement est indiquée est basée, au moins en partie, sur l'analyse statistique.

**8.** Procédé (801) selon l'une quelconque des revendications précédentes, comprenant, en réponse à une indication de tendance inverse, la réinitialisation de la fenêtre pour qu'elle commence sur ou après un point de l'indication de tendance inverse.

**9.** Système informatique (301) comprenant un processeur et une mémoire, dans lequel le processeur et la mémoire, lorsqu'ils sont combinés, sont configurés pour mettre en œuvre le procédé (801) selon l'une quelconque des revendications précédentes.

**10.** Produit de programme informatique comprenant un support non transitoire utilisable par ordinateur dans lequel est incorporé un code de programme lisible par ordinateur, le code de programme lisible par ordinateur étant conçu pour être exécuté afin de mettre en œuvre le procédé (801) selon l'une quelconque des revendications 1 à 8.

FIG. 1

EP 3 782 908 B1

FIG. 2

301

303

307

DATA TERMINAL

309 — DATA COLLECTION

SENSORS

311 — LIVE DATA STORAGE

313 — EXTENDED DATA STORAGE

305 —

315 — DATA ANALYSIS

317 — ALERT SYSTEM

DATA SERVER

FIG. 3

FIG. 4A

FIG. 4B

FIG. 5

FIG. 6A

FIG. 6B

EP 3 782 908 B1

# FIG. 6C

# FIG. 7A

EP 3 782 908 B1

FIG. 7B

FIG. 7C

27

EP 3 782 908 B1EP 3 782 908 B1

801

START

803 — RECEIVE SENSOR SIGNAL

805 — GENERATE CONDITION INDICATOR

807 — DETERMINE VOLATILITY OVER WINDOW

809 — DETERMINE MOVEMENT OVER WINDOW

811 — DETERMINE VOLATILITY-BASED MOVEMENT SIGNIFICANCE (VBMS)

813 — DETERMINE TREND INDICATION → PROVIDE VBMS AND TREND DATA

815

817 — TREND INDICATED ? — NO

YES

819 — PROVIDE ALERT SIGNAL

FIG. 8

901

OTHER SYSTEM(S)   USER(S)   DATA SOURCE(S)

I/O INTERFACE — 903

ANALYSIS ENGINE — 905   907

FIG. 9

**EP 3 782 908 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190108691 A1
- DE 19902326 A1